# EUROPEAN PATENT SPECIFICATION

(11) **EP 4 252 536 B1**
(45) Date of publication and mention of the grant of the patent: **13.05.2026**
(21) Application number: 22166337.0
(22) Date of filing: 01.04.2022
(51) Int. Cl.: A01N 1/143

(54) **PERFUSION SYSTEM**
PERFUSIONSSYSTEM
SYSTÈME DE PERFUSION

(43) Date of publication of application: 04.10.2023
(73) Proprietor: Medizinische Hochschule Hannover, 30625 Hannover (DE)
(72) Inventor: WIEGMANN, Bettina, 30916 Isernhagen (DE); HAVERICH, Axel, 30177 Hannover (DE)
(74) Representative: Kröncke, Rolf

(56) References cited:
- WO-A1-2015/143552
- WO-A1-2019/141809
- WO-A2-2016/036764
- US-A1- 2002 177 117
- US-A1- 2007 009 881
- US-A1- 2014 370 490
- US-A1- 2019 338 229
- US-A1- 2021 289 771

## Description

The invention relates to a perfusion system for performing ex-vivo perfusion of a separated biological tissue body in form of an extremity of a human or an animal.

The invention belongs to the technical field of ex-vivo organ perfusion. In recent years, so-called ex-vivo organ perfusion has been increasingly used in clinical practice in allogeneic transplantation of solid organs, especially for heart, lung, liver and kidney. Ex-vivo organ perfusion is an organ-specific, temporarily limited (<24 hours), storage option for donor organs until their transplantation, which is increasingly being used as an alternative to the still current gold standard - static, cold organ storage (4-10°C). Static, cold storage is associated with significant side effects, which ex-vivo organ perfusion is designed to minimize or prevent. Thus, the organism of the cold-stored organ is minimized, which reduces nutrient uptake and its metabolism, and the storage solution is neither continuously oxygenated (oxygen supply) nor decarboxylated (carbon dioxide release), resulting in certain storage damages (e.g., ischemia-reperfusion damage) that have a significant negative impact on the outcome after transplantation.

WO 2019/141809 A1 discloses a perfusion loop assembly for ex vivo liver perfusion, comprising at least one pump for providing a fluid flow of a perfusion fluid through a line that branches into a first branch line and a second branch line downstream of the pump, the first branch line being configured to provide a first portion of the perfusion fluid to the hepatic artery and being coupled with at least one first gas exchanger and comprising at least one flow rate and/or pressure sensor, the second branch line being configured to provide a second portion of the perfusion fluid to the portal vein and comprising at least one first valve for controlling the flow of the perfusion fluid into the portal vein, the second branch line further comprising at least one flow rate and/or pressure sensor; a liver chamber assembly; and an outlet line connecting the liver chamber assembly and the pump.

US 2021/0289771 A1 discloses a portable, ex vivo perfusion system for preserving detached biological tissue includes a receptacle for housing the tissue in a normothermic environment, a perfusion core to pump perfusate through the tissue via at least one conduit, at least one detection device to measure parameters during perfusion, and at least one parameter control device to maintain the parameter in a predetermined threshold. The system also includes a controller with instructions to receive the measured parameters, compare the parameters to predetermined thresholds, and when the parameters are outside the thresholds change an output of the at least one parameter control device to get the parameters within the threshold and alert a user that parameters were outside the thresholds.

The invention is based on the object of providing an improved perfusion system that avoids such disadvantages.

The fundamental difference to the gold standard is that the respective organs are perfused ex-vivo (outside the body), i.e. the respective separated biological tissue body, with a nutrient solution appropriately matched to the organ to be perfused, at different temperatures (depending on the protocol, from 37°C to hypothermic) and thus can maintain their physiological function within the ex-vivo system. In addition, the respective nutrient solution can be oxygenated and decarboxylated depending on the system, so that a physiological environment is established for the organ in the ex-vivo system, which ensures the exercise of the physiological organ function ex-vivo. Data generated for ex-vivo application in the context of allogeneic transplantation show that ex-vivo organ perfusion yields significantly better post-operative results compared with static, cold storage. Similarly, it has been shown that so-called marginal donor organs, which are initially of borderline organ quality for transplantation, can be regenerated and improved in quality by ex-vivo organ perfusion and then ultimately transplanted successfully. In addition, the ex-vivo organ perfusion system prolongs the "ischemia time" to be tolerated, since there is no real ischemia, i.e. a lack of oxygen, in the ex-vivo system, so that the so-called ischemia-reperfusion damage can also be significantly reduced.

Such a system is advantageously suited for extremities. Such a system is currently not yet available for extremity perfusion, neither for use in the context of allogeneic transplantation, nor the other application possibilities that will be mentioned below.

The invention is defined in the appended claims. Thus, proposed is a perfusion system for performing ex-vivo perfusion of a separated biological tissue body in form of an extremity of a human or an animal, comprising at least one basic system for providing a basic circuit of the ex-vivo perfusion with at least the following components:
a) at least one tissue body receiving chamber for receiving the separated biological tissue body,
b) at least one reservoir for storing a perfusate with level monitoring and air bubble detection,
c) at least one perfusion pump, by means of which a perfusate flow through the separated biological tissue body can be variably adjusted and the perfusate can be supplied to and removed from the separated biological tissue body via cannulas,
d) at least one integrated monitor that displays at least arterial and venous pressures in the separated biological tissue body,
e) at least one gas blender and oxygenator, via which the mixing ratio of gases applied to the perfusate, in particular oxygen and/or carbon dioxide, is regulated,
f) standard/hypothermic device for setting the perfusate temperature used to heat and/or cool the separated biological tissue body,
g) at least one control unit for controlling the controllable components of the perfusion system, the control unit being adapted to
   - provide a warning signal based on the level monitoring and the air bubble detection and/or to perform an automatic control function to prevent an air embolism from occurring in the separated biological tissue body,
   - maintain the flow rate of the perfusate through the separated biological tissue body within a predetermined range,
   - determine arterial and venous pressures in the separated biological tissue body using sensors of the perfusion system and output them on the integrated monitor,
   - regulate the mixing ratio of gases applied to the perfusate
   - and adjust the perfusate temperature.

In addition, the at least one control unit performs a monitoring of one or several of the physical quantities which are controlled by the control unit, like the flow rate of the perfusate, the perfusate temperature or of other quantities which are measured by sensors, like the arterial and venous pressures. For example, the control unit can provide a warning signal if the desired flow rate of the perfusate through the separated biological tissue body is not achieved, which means if the flow rate is outside the predetermined range. The control unit provides a warning signal if the arterial and/or venous pressures are outside a desired range. The control unit may provide a warning signal if the perfusate temperature is outside a desired range.

The separated biological tissue body is an extremity (limb), for example an arm or a leg, or a part thereof.

A suitable liquid can be used as the perfusate, which is also referred to as a perfusion solution. A basic system is proposed for the perfusion system according to the invention, which ensures organ perfusion and contains corresponding organ-specific features. The basic system includes a perfusion pump, a reservoir, an tissue body receiving chamber, and the corresponding connecting tubing. Depending on the organ and perfusion protocol, this basic set-up is supplemented with further organ-specific components - in some devices, for example, a so-called hypo and/or hyperthermia device is integrated, which enables the perfusion solution to be cooled and/or warmed up to a constant temperature. An integrated oxygenator enables oxygenation and decarboxylation of the perfusion solution. By integrating defibrillator cables and pacemaker cables, the heartbeat can still be modulated externally, for example. The result is that the basic design of the systems is almost identical, but for the sufficient and optimal function of the respective organ in the ex-vivo system, organ-specific additives are required to ensure the physiological function of the corresponding organ in the ex-vivo system.

As already mentioned in the previous sections, it is advantageous to make organ-specific adaptations to the perfusion system that allow sufficient and successful application and physiological function of the respective organ in the ex-vivo system. In addition, all systems available on the market are designed only for "acute" application (< 24 hours). A chronic continuous application (>24 hours) of all ex-vivo systems, whose focus is currently only the allogeneic transplantation setting, has not been considered in technical developments so far. The perfusion system according to the invention is also suitable for such a continuous application.

Basically, the loss of extremities / acra has far-reaching consequences for the lives of those affected. From a socio-economic perspective, limb loss often leads to inability to work, which in turn is associated with financial and social problems and may be associated with the development of psychiatric disorders, such as depression. Scientific studies have shown that there is a high coincidence between amputations, depression and social decline. In addition, the consequences of amputations place a disproportionate burden on the health care system compared to other diseases, not least because of the demanding prosthetic care.

Based on these facts, the last decades have been increasingly dedicated to the establishment and development of limb transplantation, but also autologous replantation after traumatic amputation. Compared to prosthetic treatment, the results achieved with this method show an increasing, significantly better functionality and patient satisfaction, which in turn enables the reintegration of patients into their (working) everyday life. Thus, replantation or allografting is the preferred treatment option after amputation. However, it must be remembered that a logistical and infrastructural masterpiece is still required to make this treatment a success.

Both replantation and allogeneic transplantation are microsurgical, demanding procedures that require a smooth interdisciplinary approach of a large team. Several reasons do not currently allow their widespread use, e.g., in an allocation system analogous to solid organs. The basic ischemia time of a static, cold-stored limb for replantation or allografting is approximately between 6 to 8 hours, although, analogous to solid organ transplantation, increasing ischemia time is associated with significantly worse outcome. This not only poses a major hurdle to complex allograft allocation, but also affects potential replantation after traumatic amputation. These patients often present with life-threatening polytrauma, which requires initial hemodynamic stabilization as a life-saving measure and makes prompt replantation corresponding to the ischemia time impossible.

The present invention of the ex-vivo limb perfusion system can effectively minimize the described problem. The ex-vivo limb perfusion system can be used not only in allogeneic transplantation but also in autologous replantation with the same advantages as in solid organ transplantation, and successfully counter the 72% increase in amputations predicted by 2050. In addition, the ex-vivo limb perfusion system of the invention can be used for the applications mentioned below and serve as a template for further optimization of the solid ex-vivo organ perfusion systems so that they can also be used for the applications mentioned.

The basic circuit of ex-vivo limb perfusion includes the following components:
1. Reservoir for perfusate storage with level monitoring and air bubble detection to avoid, among other things, air embolism in the circuit.
2. Perfusion pump with which the perfusate flow can be variably adjusted and the perfusate is supplied / removed via the corresponding cannulas of the extremity.
3. Integrated monitor that displays arterial and venous pressures, among others.
4. Gas blender and oxygenator (appropriately adapted size) via which the mixing ratio of the applied gases is regulated (including oxygen and carbon dioxide addition).
5. standard / hypothermia device for setting the perfusate temperature used to warm / cool the extremity.

The perfusion system may have a tissue body receiving chamber that is modularly adaptable to the type of biological tissue body being separated. The tissue body receiving chamber may have one, more, or all of the following features a) through i):
a) an X-ray device for generating X-ray images of the separated biological tissue body arranged in form of an X-ray cassette insert in the tissue body receiving chamber,
b) fold-away side walls for unimpeded surgical care of the separated biological tissue body located in the tissue body receiving chamber under physiological perfusion conditions and adherence to sterile conditions,
c) variably adjustable support elements for low-contact or non-contact support of the separated biological tissue body arranged in the tissue body receiving chamber to prevent storage-related ischemic pressure necrosis,
d) at least one weight transducer for continuous real-time detection of the weight of the separated biological tissue body arranged in the tissue body receiving chamber for continuous assessment of possible edema development and thus ischemia-reperfusion damage,
e) variable use, automatically airtight closing ports, which can be used as glove ports for manual inspection and wound care of the separated biological tissue body arranged in the tissue body receiving chamber and/or as ports for temporary integration of a thermal imaging camera in order to draw conclusions about the perfusion effectiveness via the local surface temperatures of the separated biological tissue body arranged in the tissue body receiving chamber,
f) at least one permanently integrated thermal imaging camera,
g) at least one funnel-shaped perfusate outlet at the bottom of the tissue body receiving chamber for draining off fluids, in particular perfusate and/or wound fluid,
h) at least one heating device for heating the interior of the tissue body receiving chamber, in particular a heat mat, for improving the vitality and/or for additional temperature control of the separated biological tissue body arranged in the tissue body receiving chamber in addition to the temperature control via the perfusate,
i) sensors for continuous recording of temperature and humidity in the tissue body recording chamber.

In this way, an existing perfusion system can be quickly adapted to the particular tissue body, i.e., organ or extremity, with little effort. (Extremity-specific) extensions of the basic circuit can include one, more or all of the following features:
1. modular tissue body receiving chamber adaptable to the type of separated biological tissue body, with...
2. X-ray cassette insert for conventional, fast and effective imaging, e.g. as a progress check of a surgically treated fracture, e.g. using a mobile C-arm.
3. Fold-away side walls for unhindered surgical extremity care (e.g. wound debridement, preparation for transplantation / replantation) under physiological perfusion conditions and adherence to sterile conditions.
4. Variably adjustable support arrangements for non-contact positioning of the limb, e.g. via an integrated external fixator, so that position-related ischemic pressure necroses are prevented.
5. Integration of weight transducers for continuous real-time recording of limb weight to ensure ongoing assessment of edema development and thus ischemia-reperfusion injury.
6. Variable, airtight penetration points that can be used as glove penetrations to enable manual inspection (e.g. tissue consistency) and wound care of the limb and thus significantly reduce the risk of pathogenic germs penetrating. On the other hand, the penetration sites are used for temporary integration of the thermal imaging camera' to allow conclusions about perfusion effectiveness via the local surface temperatures of the limb.
7. Funnel-shaped perfusate outlet at the bottom of the tissue body receiving chamber, since perfusate and wound fluid can escape into the tissue body receiving chamber chamber regardless of the cannulation (arterial only or venous and arterial). For return to the perfusate circuit, this can be drained into the reservoir via the funnel-shaped outlet.
8. Regulation of the chamber temperature via a heat mat to additionally improve the vitality of the ex-vivo perfused limb in addition to the temperature control via the perfusate.
9. Humidity regulation and hyperbaric oxygen therapy by introducing pure oxygen into the tissue body receiving chamber chamber to create and maintain an ideal humidity level. For hyperbaric oxygen therapy, positive pressure can be created in the airtight tissue body receiving chamber by closing the release valve, thus producing improved stimulation of wound healing via the increased partial pressure of oxygen in the tissues.
10. Sensors for continuous recording of temperature and humidity in the tissue body receiving chamber to enable ongoing assessment and consequent initiation of medical countermeasures. To counteract measurement inaccuracies in thermography and to keep humidity as low as possible, closed cannulation is aimed for.
11. Integration of different perfusate filters: In general, depending on the research-relevant or clinical setting, the integration of the different filters serves to remove corresponding substances from the ex-vivo circulation that otherwise have negative effects on perfusion or the ex-vivo perfused limb, such as e.g.
   a.) Microaggregate filters - are used to filter platelet / leukocyte aggregates, which are formed especially during storage of blood components (e.g. whole blood platelet concentrates) and can clog vessels when unfiltered blood components are used for ex-vivo perfusion.
   b.) Leukocyte filter - this is particularly relevant in the context of allogeneic transplantation, but also in the use of blood components for ex-vivo perfusion in order to largely prevent the leukocyte content (including monocytes' lymphocytes) and thus the primary immunization against the leukocytes (including preventing HLA immunization).
   c.) Hemo(dia)filter - used for filtering small and large urinary pflichtigen molecules (e.g., myoglobinfilter).
   d.) Cytokine filters - serve to effectively filter cytokines and chemokines (including IL-1, IL-2, IL-6, TNFα) that would otherwise initiate further immunological responses/cascades (e.g., enhancement of Ischemia-reperfusion injury) that would have a deleterious effect on the ex-vivo perfused limb.

As far as a limb is mentioned, this also relates to other kinds of separated biological tissue bodies.

The perfusion system may be expanded to include one, more, or all of the following diagnostic-therapeutic adjuncts:
1. Transcutaneous electrical nerve stimulation (TENS) / electrical muscle stimulation (EMS): The essential, functional maintenance of nerve and muscle activity, both for diagnostic (functional re-evaluation of the limb) and therapeutic (e.g. contracture prophylaxis) purposes, is achieved with the aid of the TENS and EMS methods. For this purpose, current pulses applied to the separated biological tissue body that differ significantly in frequencies, pulse widths and intensity are applied either transcutaneously or via the respective nerve or muscle ends. The additional examination of nerve conduction velocity (NLG) is used to evaluate whether TENS can maintain the physiological functionality of neuronal stimulation, prevent nerve regression, and thus lead to an improved outcome after transplantation/replantation. In EMS, transcutaneous repetitive straw pulses are applied to maintain muscular motility and target individual muscles. Comparative analyses of EMS are performed analogously to TENS, with NLG evaluation replaced by the corresponding force measurement.
2. Implementation of a syringe pump for pH regulation to reduce pH fluctuations. For the implementation of the algorithm for pH regulation, basic data is first generated by means of manually performed BGAs (BGA - blood gas analysis) and manually applied additives. By storing the basic data in the algorithm for pH regulation, automated addition of additives for pH regulation is made possible within the framework of real-time pH recording and simultaneous use of syringe pumps.
3. Implementation of a syringe pump for potassium / glucose regulation, or further controlled application of drugs / additives: As an essential cellular energy supplier, glucose is utilized via aerobic glycolysis under sufficient oxygen and glucose supply. If hypoxia occurs, e.g. as a result of reduced perfusion, energy production is controlled via anaerobic glycolysis, during which additional lactate is produced and can be used as a marker of insufficient oxygen supply in the EVEP. Analogous to the automatic pH regulation, the analysis of the perfusate values of potassium and glucose is carried out via BGAs to be taken manually, with consecutive manual additive applications (e.g. potassium / glucose application, glucose / Insulin administration), in order to generate the corresponding basic data for the automation process.
4. Implementation of online BGA measurement for real-time acquisition of arterial and venous perfusate parameters (pO2, pCO2, pH, potassium, sodium, calcium, lactate, glucose).
5. Correlation of surface temperature, depth temperature, pulse oximetry and hyperbaric oxygen therapy to diagnose and treat deficient perfusion of the limb in real time at an early stage. Continuous temperature measurement of the limb can be relied upon, as deficient perfusion is associated with a corresponding local temperature decrease. In this context, the thermographically measured surface temperature reflects the effectiveness of the chamber temperature and the depth temperature of the limb measured by filigree needle probes reflects the effectiveness of perfusion. In addition, the diagnosis is enhanced by the interpretation of pulse oximetry, which measures oxygen saturation in the acras. Hyperbaric oxygen therapy, due to its expansion coldness, can lead to a cooling of the chamber temperature, which consecutively causes the decrease of the surface temperature, depth temperature and oxygen saturation, possibly leading to a misinterpretation of the extremity perfusion, which is why this is also investigated.
6. Implementation of extremity-specific motion splints that are motor-driven to improve mobility, prevent stiffening and support the healing process - this applies in particular in the context of ex-vivo long-term perfusion of extremities (CPM - continuous passive motion).

It is further advantageous to have an adaptable tissue body receiving chamber with the following features:
1. Modular design to allow different sized extremities to be integrated into the tissue body receiving chamber in the most flexible and efficient way possible.
2. the materials used can be permeable to X-rays and free of ferromagnetic particles.
3. the materials used can be hemocompatible and biocompatible, and have appropriate transparency for continuous visual monitoring of the ex-vivo perfused limb.

As described earlier, there is currently no corresponding system that ensures ex-vivo limb perfusion for clinical use, or research use to this extent. Although there are already ex-vivo perfusion systems for solid organs, there is currently no device for ex-vivo limb perfusion that can be used clinically.

The control unit of the perfusion system can be set up to control several or all components of the perfusion system. Insofar as signals are detected by sensors, the control unit can evaluate these signals and can perform a control or regulation of the respective physical variable.

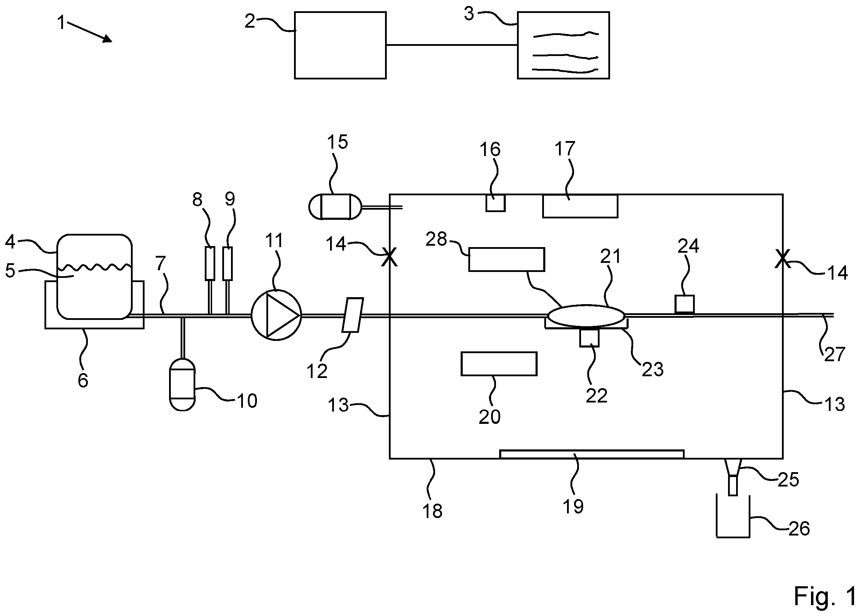

The invention is explained below with reference to an examplary embodiment using the drawing Figure 1. Figure 1 shows a perfusion system 1 in schematic representation.

The perfusion system 1 is used to perform ex-vivo perfusion of a separated biological tissue body 21. The perfusion system 1 has a control unit 2, e.g. in the form of an electronic control unit, which is connected to a monitor 3. The monitor 3 is used to display status information of the tissue body 21, for example to display signals detected by sensors in the tissue body 21. In addition, status information of individual components of the perfusion system 1 can also be displayed on the monitor 3, such as characteristic data of a perfusate 5 or characteristic data of a tissue body receiving chamber 18.

The perfusion system 1 further has a reservoir 4 in which an amount of perfusate 5 is stored, further a temperature control device 6 for controlled adjustment of the temperature of the perfusate 5 in the reservoir 4. The temperature control device 6 may be, for example, a standard/hypothermia device or a hyperthermia device, or a combination thereof.

The perfusion system 1 further comprises a gas container 10 containing oxygen. Furthermore, the perfusion system 1 has a delivery device 8, e.g. a syringe pump, for automatic pH regulation and/or automatic reduction of pH fluctuations in the perfusate 5 and a further delivery device 9, in particular a syringe pump, for automatic potassium and/or glucose regulation and/or further controlled applications of drugs in the perfusate 5.

The perfusion system 1 further comprises a perfusion pump 11 for pumping the perfusate 5 through the tissue body 21 and a filter changing system 12 for integrating different perfusate filters. The perfusate filters allow the perfusate 5 to be filtered before being delivered to the tissue body 21.

The perfusion system 1 has a tissue body receiving chamber 18 that is modularly adaptable to the type of separated biological tissue body 21. The tissue body receiving chamber 18 may have fold-away side walls 13. Variable-use, automatically air-tightly closing passageways 14 may be provided on the side walls 13 and/or on other walls of the tissue body receiving chamber 18, which serve as glove passages for manual inspection and wound care and other activities on the tissue body 21.

In the tissue body receiving chamber 18, variably adjustable holding elements 23 are provided for low-contact or non-contact placement of the tissue body 21. Furthermore, at least one weight sensor 22 is provided for continuous real-time recording of the weight of the tissue body 21. Furthermore, a heating device 19, for example a heat mat, is provided for heating the interior of the tissue body receiving chamber 18. Furthermore, an X-ray device 20 for generating X-ray images of the tissue body 21 is provided in the tissue body receiving chamber 18.

Further connected to the tissue body receiving chamber 18 is an oxygen supply system 15 for supplying substantially pure oxygen to the tissue body receiving chamber 18. Furthermore, the tissue body receiving chamber 18 has a thermal imaging camera 17 arranged there permanently or only temporarily for generating thermal images of the tissue body 21, and further sensors 16, e.g. sensors for detecting the temperature and the humidity inside the tissue body receiving chamber 18.

The tissue body receiving chamber 18 has a funnel-shaped perfusate outlet 25 at the bottom of the tissue body receiving chamber 18, which serves to drain off liquids, in particular perfusate and/or wound fluid. The liquids can be collected in a collection container 26 and/or recycled to the reservoir 4.

The reservoir 4 is connected to the tissue body 21 via a feed line 7 through the perfusion pump 11 and the filter changing system 12. The perfusate 5 is discharged from the tissue body 21 via a discharge line 27. As shown, the gas container 10 and the feed devices 8, 9 may be connected to the feed line 7, e.g. upstream of the perfusion pump 11. The filter changing system 12 is also connected to the feed line 7, e.g. downstream of the perfusion pump 11.

Furthermore, an online BGA measuring device 24 may be present for real-time recording of arterial and venous parameters and, if necessary, other characteristic parameters of the perfusate 5 passed through the tissue body 21. Furthermore, an electrical stimulation system 28 for electrical nerve stimulation and/or muscle stimulation of the tissue body 21 may be present in the perfusion system 1.

The control unit 2 may be set up to receive and evaluate the signals from the various sensors. The control unit 2 can also be set up to control the controllable components of the perfusion system 1.

## Claims

1. Perfusion system (1) for performing ex-vivo perfusion of a separated biological tissue body (21) in form of an extremity of a human or an animal, comprising at least one basic system for providing a basic circuit of the ex-vivo perfusion with at least the following components:
a) at least one tissue body receiving chamber (18) for receiving the separated extremity (21),
b) at least one reservoir (4) for storing a perfusate (5),
c) at least one perfusion pump (11), by means of which a perfusate (5) flow through the separated extremity (21) can be variably adjusted and the perfusate (5) can be supplied to and removed from the separated extremity (21) via cannulas,
d) at least one integrated monitor (3) that displays at least arterial and venous pressures in the separated extremity (21),
e) at least one gas blender and oxygenator, via which the mixing ratio of gases applied to the perfusate (5), in particular oxygen and/or carbon dioxide, is regulated,
f) a standard/hypothermic device for setting the perfusate temperature used to heat and/or cool the separated extremity (21),
g) at least one control unit (2) for controlling the controllable components of the perfusion system (1), the control unit (2) being adapted to
- provide a warning signal,
- maintain the flow rate of the perfusate (5) through the separated extremity (21) within a predetermined range,
- regulate the mixing ratio of gases applied to the perfusate (5)
- and adjust the perfusate temperature,
**characterized in that**
h) the at least one reservoir (4) is configured to store the perfusate (5) with level monitoring and air bubble detection,
i) the perfusion system (1) comprises at least one electrical stimulation system (28) for electrical nerve stimulation and/or electrical muscle stimulation of the separated extremity (21), and/or that the perfusion system (1) has extremity-specific motion splints that are motor-driven adapted for continuous passive motion of the separated extremity (21), and
j) the control unit (2) is adapted to provide the warning signal based on the level monitoring and the air bubble detection and/or to perform an automatic control function to prevent an air embolism from occurring in the separated extremity (21) and to determine arterial and venous pressures in the separated extremity (21) using sensors (16) of the perfusion system (1) and output them on the integrated monitor (3).

2. The perfusion system of claim 1, **characterized in that** the perfusion system (1) has a tissue body receiving chamber (18) that is modularly adaptable to the type of the separated extremity (21) by modular design to allow different sized extremities to be integrated into the tissue body receiving chamber (18).

3. The perfusion system of claim 2, **characterized in that** the tissue body receiving chamber (18) has one, more or all of the following features a) to i):
a) an X-ray cassette insert (20) for generating X-ray images of the separated biological tissue body (21) arranged in the tissue body receiving chamber (18),
b) fold-away side walls (13) for unimpeded surgical care of the separated extremity (21) located in the tissue body receiving chamber (18) under physiological perfusion conditions and adherence to sterile conditions,
c) variably adjustable support elements for low-contact or non-contact support of the separated extremity (21) arranged in the tissue body receiving chamber (18) to prevent storage-related ischemic pressure necrosis,
d) at least one weight transducer for continuous real-time detection of the weight of the separated extremity (21) arranged in the tissue body receiving chamber (18) for continuous assessment of possible edema development and thus ischemia-reperfusion damage,
e) variable use, automatically airtight closing ports, which can be used as glove ports for manual inspection and wound care of the separated extremity (21) arranged in the tissue body receiving chamber (18) and/or as ports for temporary integration of a thermal imaging camera in order to draw conclusions about the perfusion effectiveness via the local surface temperatures of the separated extremity (21) arranged in the tissue body receiving chamber (18),
f) at least one permanently integrated thermal imaging camera,
g) at least one funnel-shaped perfusate outlet (25) at the bottom of the tissue body receiving chamber (18) for draining off fluids, in particular perfusate (5) and/or wound fluid,
h) at least one heating device (19) for heating the interior of the tissue body receiving chamber (18), in particular a heat mat, for improving the vitality and/or for additional temperature control of the separated extremity (21) arranged in the tissue body receiving chamber (18) in addition to the temperature control via the perfusate (5),
i) sensors (16) for continuous recording of temperature and humidity in the tissue body receiving chamber.

4. The perfusion system according to any one of the preceding claims, **characterized in that** the perfusion system (1) has an oxygen supply system (15) for delivering substantially pure oxygen to the tissue body receiving chamber (18).

5. The perfusion system according to claim 4, **characterized in that** the control unit (2) is arranged to influence the humidity in the tissue body receiving chamber (18) and/or to perform hyperbaric oxygen therapy on the separated extremity (21) arranged in the tissue body receiving chamber (18) by controlling the oxygen supply system (15).

6. The perfusion system according to any of the preceding claims, **characterized in that** the perfusion system (1) has an exchangeable filter system for integrating different perfusate filters, in particular for a microaggregate filter, a leukocyte filter, a hemodia filter, a cytokine filter.

7. The perfusion system according to one of the preceding claims, **characterized in that** the perfusion system (1) has at least one delivery device (8, 9) controllable by the control unit (2), in particular a syringe pump, for automatic pH regulation and/or for automatic reduction of pH fluctuations in the perfusate (5) passed through the separated extremity (21).

8. The perfusion system according to one of the preceding claims, **characterized in that** the perfusion system (1) has at least one delivery device (8, 9) controllable by the control unit (2), in particular a syringe pump, for automatic potassium and/or glucose regulation and/or further controlled application of drugs in the perfusate (5) passed through the separated extremity (21).

9. The perfusion system according to one of the preceding claims, **characterized in that** the perfusion system (1) has at least one online blood gas analysis (BGA) measurement for real-time detection of arterial and venous parameters, in particular pO2, pCO2, pH, potassium, sodium, calcium, lactate and/or glucose, in the perfusate (5) passed through the separated extremity (21).

## Patentansprüche

1. Perfusionssystem (1) zur Durchführung einer Ex-vivo-Perfusion eines abgetrennten biologischen Gewebekörpers (21) in Form einer Extremität eines Menschen oder eines Tieres, umfassend mindestens ein Basissystem zur Bereitstellung eines Basiskreislaufs der Ex-vivo-Perfusion mit mindestens den folgenden Komponenten:
a) mindestens eine Gewebekörperaufnahmekammer (18) zur Aufnahme der abgetrennten Extremität (21),
b) mindestens ein Reservoir (4) zur Speicherung eines Perfusats (5),
c) mindestens eine Perfusionspumpe (11), mittels der ein Perfusatfluss (5) durch die abgetrennte Extremität (21) variabel einstellbar ist und das Perfusat (5) über Kanülen der abgetrennten Extremität (21) zugeführt und aus dieser entfernt werden kann,
d) mindestens einen integrierten Monitor (3), der mindestens den arteriellen und venösen Druck in der abgetrennten Extremität (21) anzeigt,
e) mindestens einen Gasmischer und Oxygenator, über den das Mischungsverhältnis der dem Perfusat (5) zugeführten Gase, insbesondere Sauerstoff und/oder Kohlendioxid, geregelt wird,
f) Standard-/Hypothermiegerät zur Einstellung der Perfusat-Temperatur, das zum Erwärmen und/oder Kühlen der abgetrennten Extremität (21) verwendet wird,
g) mindestens eine Steuereinheit (2) zur Steuerung der steuerbaren Komponenten des Perfusionssystems (1), wobei die Steuereinheit (2) dazu ausgelegt ist
- ein Warnsignal auszugeben,
- die Durchflussrate des Perfusats (5) durch die abgetrennte Extremität (21) innerhalb eines vorgegebenen Bereichs zu halten,
- das Mischungsverhältnis der dem Perfusat (5) zugeführten Gase zu regulieren
- und die Perfusat-Temperatur anzupassen,
**dadurch gekennzeichnet, dass**
h) der mindestens eine Vorratsbehälter (4) so konfiguriert ist, dass er das Perfusat (5) mit Füllstandsüberwachung und Luftblasenerkennung speichert,
i) das Perfusionssystem (1) mindestens ein elektrisches Stimulationssystem (28) zur elektrischen Nervenstimulation und/oder elektrischen Muskelstimulation der abgetrennten Extremität (21) umfasst, und/oder dass das Perfusionssystem (1) extremitätsspezifische Bewegungsschienen aufweist, die motorisch angetrieben und für eine kontinuierliche passive Bewegung der abgetrennten Extremität (21) ausgelegt sind, und
j) die Steuereinheit (2) dazu ausgelegt ist, das Warnsignal auf der Grundlage der Füllstandsüberwachung und der Luftblasenerkennung bereitzustellen und/oder eine automatische Steuerungsfunktion auszuführen, um das Auftreten einer Luftembolie in der abgetrennten Extremität (21) zu verhindern und den arteriellen und venösen Druck in der abgetrennten Extremität (21) unter Verwendung von Sensoren (16) des Perfusionssystems (1) zu bestimmen und auf dem integrierten Monitor (3) auszugeben .

2. Perfusionssystem nach Anspruch 1, **dadurch gekennzeichnet, dass** das Perfusionssystem (1) eine Gewebekörperaufnahmekammer (18) aufweist, die durch modularen Aufbau an die Art der abgetrennten Extremität (21) anpassbar ist, um unterschiedlich große Extremitäten in die Gewebekörperaufnahmekammer (18) integrieren zu können.

3. Perfusionssystem nach Anspruch 2, **dadurch gekennzeichnet, dass** die Gewebekörperaufnahmekammer (18) eines, mehrere oder alle der folgenden Merkmale a) bis i) aufweist:
a) einen Röntgenkassetteneinsatz (20) zur Erzeugung von Röntgenbildern des in der Gewebekörperaufnahmekammer (18) angeordneten abgetrennten biologischen Gewebekörpers (21),
b) wegklappbare Seitenwände (13) zur ungehinderten chirurgischen Versorgung der in der Gewebekörperaufnahmekammer (18) befindlichen abgetrennten Extremität (21) unter physiologischen Perfusionsbedingungen und unter Einhaltung steriler Bedingungen,
c) variabel einstellbare Stützelemente zur berührungsarmen oder berührungsfreien Abstützung der in der Gewebekörperaufnahmekammer (18) angeordneten abgetrennten Extremität (21) zur Vermeidung einer lagerungsbedingten ischämischen Drucknekrose,
d) mindestens einen in der Gewebekörperaufnahmekammer (18) angeordneten Gewichtssensor zur kontinuierlichen Echtzeit-Erfassung des Gewichts der abgetrennten Extremität (21) zur kontinuierlichen Beurteilung einer möglichen Ödembildung und damit einer Ischämie-Reperfusionsschädigung,
e) variabel nutzbare, automatisch luftdicht verschließbare Anschlüsse, die als Handschuhanschlüsse für die manuelle Inspektion und Wundversorgung der abgetrennten Extremität (21) in der Gewebekörperaufnahmekammer (18) und/oder als Anschlüsse für die vorübergehende Integration einer Wärmebildkamera zur Ableitung von Rückschlüssen auf die Perfusionseffektivität über die lokalen Oberflächentemperaturen der abgetrennten Extremität (21) in der Gewebekörperaufnahmekammer (18) genutzt werden können,
f) mindestens eine fest integrierte Wärmebildkamera,
g) mindestens einen trichterförmigen Perfusatauslass (25) am Boden der Gewebekörperaufnahmekammer (18) zum Ableiten von Flüssigkeiten, insbesondere Perfusat (5) und/oder Wundflüssigkeit,
h) mindestens eine Heizvorrichtung (19) zum Beheizen des Innenraums der Gewebekörperaufnahmekammer (18), insbesondere eine Heizmatte, zur Verbesserung der Vitalität und/oder zur zusätzlichen Temperaturregelung der in der Gewebekörperaufnahmekammer (18) angeordneten abgetrennten Extremität (21) zusätzlich zur Temperaturregelung über das Perfusionsmittel (5),
i) Sensoren (16) zur kontinuierlichen Erfassung von Temperatur und Feuchtigkeit in der Gewebekörperaufnahmekammer.

4. Perfusionssystem nach einem der vorstehenden Ansprüche, **dadurch gekennzeichnet, dass** das Perfusionssystem (1) ein Sauerstoffversorgungssystem (15) zum Zuführen von im Wesentlichen reinem Sauerstoff in die Gewebekörperaufnahmekammer (18) aufweist.

5. Perfusionssystem nach Anspruch 4, **dadurch gekennzeichnet, dass** die Steuereinheit (2) dazu ausgelegt ist, die Feuchtigkeit in der Gewebekörperaufnahmekammer (18) zu beeinflussen und/oder eine hyperbare Sauerstofftherapie an der in der Gewebekörperaufnahmekammer (18) angeordneten abgetrennten Extremität (21) durch Steuerung des Sauerstoffversorgungssystem (15) durchzuführen.

6. Perfusionssystem nach einem der vorstehenden Ansprüche, **dadurch gekennzeichnet, dass** das Perfusionssystem (1) ein austauschbares Filtersystem zum Einbau verschiedener Perfusatfilter, insbesondere für einen Mikroaggregatfilter, einen Leukozytenfilter, einen Hämodiafilter, einen Zytokinfilter, aufweist.

7. Perfusionssystem nach einem der vorstehenden Ansprüche, **dadurch gekennzeichnet, dass** das Perfusionssystem (1) mindestens eine von der Steuereinheit (2) steuerbare Abgabevorrichtung (8, 9), insbesondere eine Spritzenpumpe, zur automatischen pH-Regulierung und/oder zur automatischen Reduzierung von pH-Schwankungen im durch die abgetrennte Extremität (21) geleiteten Perfusat (5) aufweist.

8. Perfusionssystem nach einem der vorstehenden Ansprüche, **dadurch gekennzeichnet, dass** das Perfusionssystem (1) mindestens eine von der Steuereinheit (2) steuerbare Abgabevorrichtung (8, 9), insbesondere eine Spritzenpumpe, zur automatischen Kalium- und/oder Glukoseregulierung und/oder weiteren kontrollierten Zugabe von Medikamenten in das durch die getrennte Extremität (21) geleitete Perfusat (5) aufweist.

9. Perfusionssystem nach einem der vorstehenden Ansprüche, **dadurch gekennzeichnet, dass** das Perfusionssystem (1) mindestens ein Online-Blutgasanalyse-Messgerät zur Echtzeit-Erfassung arterieller und venöser Parameter, insbesondere pO2, pCO2, pH, Kalium, Natrium, Kalzium, Laktat und/oder Glukose, im Perfusat (5) aufweist, das durch die abgetrennte Extremität (21) geleitet wird.

## Revendications

1. Système de perfusion (1) destiné à effectuer une perfusion ex vivo d'un corps tissulaire biologique isolé (21) sous forme d'un membre d'un humain ou d'un animal, comprenant au moins un système de base pour fournir un circuit de base de la perfusion ex vivo avec au moins les composants suivants :
a) au moins une chambre de réception de corps tissulaire (18) pour recevoir le membre isolé (21),
b) au moins un réservoir (4) pour stocker un perfusat (5),
c) au moins une pompe de perfusion (11) au moyen de laquelle un écoulement de perfusat (50) à travers le membre isolé (21) peut être alimenté au membre isolé (21) et retiré de celui-ci (21) via des canules,
d) au moins un dispositif de surveillance intégré (3) qui affiche au moins des pressions artérielles et veineuses dans le membre isolé (21),
e) au moins un mélangeur de gaz et un oxygénateur au moyen desquels le rapport de mélange gazeux appliqué sur le perfusat (5), en particulier de l'oxygène et/ou du dioxyde de carbone, est régulé,
f) un dispositif standard/hypothermique pour fixer la température de perfusat utilisée pour chauffer/refroidir le membre isolé (21),
g) au moins une unité de commande (2) pour commander les composants commandables du système de perfusion (1), l'unité de commande (2) étant adaptée pour
- fournir un signal d'avertissement,
- maintenir le débit du perfusat (5) à travers le membre isolé (21) à l'intérieur d'une plage déterminée,
- réguler le rapport de mélange gazeux appliqué sur le perfusat (5) et
- ajuster la température de perfusat,
**caractérisé en ce que**
h) ledit au moins un réservoir (4) est configuré pour stocker le perfusat (5) avec une surveillance de niveau et une détection de bulles d'air,
i) le système de perfusion (1) comprend au moins un système de stimulation électrique (28) pour une stimulation nerveuse électrique et/ou une stimulation musculaire électrique du membre isolé (21), et/ou **en ce que** le système de perfusion (1) est équipé d'attelles de mobilisation spécifiques au membre, entraînées par moteur, conçues pour assurer une mobilisation passive continue du membre isolé (21), et
j) l'unité de commande (2) est adaptée pour fournir le signal avertissement sur la base de la surveillance de niveau et de la détection de bulles d'air et/ou pour effectuer une fonction de commande automatique pour empêcher une embolie gazeuse de se produire dans le membre isolé (21) et pour déterminer des pressions artérielles et veineuses dans le membre isolé (21) à l'aide de capteurs (16) du système de perfusion (1) et pour sortir celles-ci sur le dispositif de surveillance intégrée (3).

2. Système de perfusion selon la revendication 1, **caractérisé en ce que** le système de perfusion (1) a une chambre de réception de corps tissulaire (18) qui peut être adaptée de façon modulaire au type du membre isolé (21) via une conception modulaire pour permettre à des membres de tailles différentes d'être intégrés dans la chambre de réception de corps tissulaire (18).

3. Système de perfusion selon la revendication 2, **caractérisé en ce que** la chambre de réception de corps tissulaire (18) a un, plusieurs ou tous les éléments a) à i) suivants :
a) un insert de cassette à rayons X (20) pour générer des images radiographiques du corps tissulaire biologique isolé (21) agencé dans la chambre de réception de corps tissulaire (18),
b) des parois latérales rabattables (13) permettant des soins chirurgicaux sans obstacle du membre isolé (21) situé dans la chambre de réception de corps tissulaire (18) dans des conditions de perfusion physiologique et de respect de conditions stériles,
c) des éléments de support ajustables de façon variable pour un support à faible contact ou sans contact du membre isolé (21) agencé dans la chambre de réception de corps tissulaire (18) afin d'empêcher une nécrose ischémique par pression liée au stockage,
d) au moins un transducteur de poids pour une détection continue en temps réel du poids du membre isolé (21) agencé dans la chambre de réception de corps tissulaire (18) afin d'évaluer en continu un éventuel développement d'un œdème et, par conséquent, de lésions d'ischémie-reperfusion,
e) des orifices à fermeture automatiquement, étanches à l'air et d'utilisation variable, qui peuvent être utilisés en tant qu'orifices pour gants à des fins d'inspection manuelle et de soins de plaies de l'élément isolé (21) agencé dans la chambre de réception de corps circulaire (18) et/ou en tant qu'orifices pour une intégration temporaire d'une caméra à imagerie thermique afin de tirer des conclusions sur l'efficacité de la perfection via les températures superficielles locales du membre isolé (21) agencé dans la chambre de réception de corps tissulaire (18),
f) au moins une caméra à imagerie thermique intégrée de manière permanente,
g) au moins une sortie de perfusat en forme d'entonnoir (25) au niveau du fond de la chambre de réception de corps tissulaire (18) pour drainer des fluides, en particulier le perfusat (5) et/ou un fluide issu de plaies,
h) au moins un dispositif de chauffe (19) pour chauffer l'intérieur de la chambre de réception de corps tissulaire (18), en particulier un tapis chauffant, afin d'améliorer la vitalité et/ou pour une commande additionnelle de température du membre isolé (21) agencé dans la chambre de réception de corps tissulaire (18) en addition à la commande de température via le perfusat (5),
i) des capteurs (16) pour enregistrer en continu la température et l'humidité dans la chambre de réception de corps tissulaire.

4. Système de perfusion selon l'une des revendications précédentes, **caractérisé en ce que** le système de perfusion (1) présente un système d'alimentation en oxygène (15) pour distribuer de l'oxygène sensiblement pur à la chambre de réception de corps tissulaire (18).

5. Système de perfusion selon la revendication 4, **caractérisé en ce que** l'unité de commande (2) est agencée pour influencer l'humidité dans la chambre de réception de corps tissulaire (18) et/ou pour effectuer une oxygénothérapie hyperbare sur le membre isolé (21) agencé dans la chambre de réception de corps tissulaire (18) en commandant le système d'alimentation en oxygène (15).

6. Système de perfusion selon l'une quelconque des revendications précédentes, **caractérisé en ce que** le système de perfusion (1) a un système à filtres interchangeables pour intégrer des filtres à perfusat différents, en particulier pour un filtre à microagrégats, un filtre à leucocytes, un filtre d'hémodiafiltration, un filtre à cytokines.

7. Système de perfusion selon l'une des revendications précédentes, **caractérisé en ce que** le système de perfusion (1) a au moins un dispositif de distribution (8, 9) pouvant être commandé par l'unité de commande (2), en particulier une pompe à seringue, pour une régulation automatique du pH et/ou pour une réduction automatique de fluctuations du pH dans le perfusat (5) qui est passé à travers le membre isolé (21).

8. Système de perfusion selon l'une des revendications précédentes, **caractérisé en ce que** le système de perfusion (1) a au moins un dispositif de distribution (8, 9) pouvant être commandé par l'unité de commande (2), en particulier une pompe à seringue, pour une régulation automatique de potassium et/ou de glucose et/ou en outre une application commandée de médicaments dans le perfusat (5) qui est passé à travers le membre isolé (21).

9. Système de perfusion selon l'une des revendications précédentes, **caractérisé en ce que** le système de perfusion (1) a au moins un mesurage en ligne d'analyse de gaz sanguins (BGA) pour une détection en temps réel de paramètres artériels et veineux, en particulier de pO2, pCO2, pH, potassium, sodium, calcium, lactate et/ou glucose, dans le perfusat (5) qui est passé à travers le membre isolé (21).
